# EUROPÄISCHE PATENTSCHRIFT

(11) **EP 2 453 558 B1**
(45) Veröffentlichungstag und Bekanntmachung des Hinweises auf die Patenterteilung: **14.09.2022**
(21) Anmeldenummer: 11002129.2
(22) Anmeldetag: 15.03.2011
(51) Int. Cl.: H02K 5/12, H02K 5/22, H02K 11/00, F04D 13/06, F04D 15/02, F04B 49/06, F04D 29/046, G05D 9/12, H02K 21/16, H02K 21/24, H02K 5/10, H02K 1/14, H02K 1/18, H02K 1/27, H02P 6/18, H02K 3/28, H02K 5/128, H02K 5/173, H02K 5/24, H02K 9/197

(54) **Pumpenaggregat**
Pump unit
Groupe motopompe

(30) Priorität: 11.11.2010 DE 102010051916; 11.11.2010 DE 102010051918
(43) Veröffentlichungstag der Anmeldung: 16.05.2012
(73) Patentinhaber: Grundfos Management a/s, 8850 Bjerringbro (DK)
(72) Erfinder: Blaser, Georg, 71679 Asperg (DE); Brösamle, Pino, 71679 Asperg (DE)
(74) Vertreter: Patentanwälte Vollmann Hemmer Lindfeld Partnerschaft mbB

(56) Entgegenhaltungen:
- WO-A1-98/35424
- WO-A1-2008/019818
- DE-A1-102004 027 744
- JP-A- 2003 018 797

## Beschreibung

Die Erfindung betrifft ein Pumpenaggregat mit einem elektrischen Antriebsmotor, welcher ein Statorgehäuse und zumindest einen mit diesem verbundenen Klemmenkasten aufweist.

Pumpenaggregate, beispielsweise Umwälzpumpenaggregate, wie Heizungsumwälzpumpen oder Brauchwasserumwälzpumpen weisen üblicherweise einen in einem rohrförmigen Statorgehäuse angeordneten elektrischen Antriebsmotor auf, wobei das Statorgehäuse an einem Axialende mit einem Pumpengehäuse verbunden ist, in welchem mindestens ein Laufrad zur Förderung einer Flüssigkeit rotiert. Bei bekannten Pumpenaggregaten ist meist außen am Statorgehäuse ein Elektronikgehäuse bzw. Klemmenkasten angeordnet, in welchem elektrische Anschlusselemente und elektrische und/oder elektronische Bauteile zur Steuerung des Antriebsmotors angeordnet sind. Die elektronischen Bauteile können insbesondere einen Frequenzumrichter umfassen. Ein solcher Klemmenkasten kann umfänglich oder auch axial an den dem Pumpengehäuse abgewandeten Ende des Statorgehäuses angeordnet sein.

Die Klemmenkästen solcher Pumpenaggregate können zum elektrischen Anschluss einen Steckbereich aufweisen, an welchem ein elektrisches Anschlusskabel mit einem korrespondierenden Stecker angesteckt werden können. Ein solches Pumpenaggregat ist z. B. aus WO 2008/019818 A1 bekannt. Alternativ sind Klemmenkästen bekannt, welche auf ihrer Außenseite einen abnehmbaren Deckel und in einer Wandung eine Kabeldurchführung haben. Durch diese Kabeldurchführung kann ein Kabel in das Innere des Klemmenkastens geführt werden und dann bei abgenommenem Deckel im Inneren des Klemmenkastens an Anschlussklemmen angeschlossen werden. Darüber hinaus weisen die Klemmenkästen elektrische Anschlüsse zur Verbindung mit den Spulen des Stators im Inneren des Statorgehäuses auf. Auch hierzu sind Steckkontakte bekannt, welche an der dem Statorgehäuse zugewandten Seite des Klemmenkastens angeordnet werden müssen. Auch dies ist z. B. aus WO 2008/019818 A1 bekannt.

D.h. der Klemmenkasten muss mehrere Öffnungen für die elektrischen Anschlusselemente und einen Deckel zum Anschließen einer Anschlussleitung an seiner Außenseite aufweisen. Dies erfordert einen komplizierten Aufbau. Insbesondere ist jedoch die Abdichtung problematisch da an jeder Öffnung Dichtungen vorgesehen werden müssen, um ein Eindringen von Feuchtigkeit in den Klemmenkasten zu verhindern.

WO 98/35424 A1 offenbart:

Elektrischer Antriebsmotor mit einem Frequenzumrichter, welcher ein Statorgehäuse und zumindest einen mit diesem verbundenen Klemmenkasten aufweist, wobei der Klemmenkasten in seinem Inneren zumindest eine Trennwand aufweist, welche einen Innenraum des Klemmenkastens in zumindest einen Elektronikbereich mit elektronischen Bauteilen und einen Anschlussbereich teilt, wobei der Anschlussbereich an eine Außenwandung des Klemmenkastens angrenzt, in welcher zumindest eine Kabeldurchführung ausgebildet ist und in dem Anschlussbereich sowohl elektrische Anschlüsse für zumindest eine Anschlussleitung als auch Kontakte zur elektrischen Verbindung mit im Inneren des Statorgehäuses angeordneten elektrischen oder elektronischen Bauteilen vorhanden sind, wobei der Anschlussbereich dem Statorgehäuse zugewandt ist.

DE 10 2004/027744 A1 offenbart einen Elektromotor mit einem Elektronikkasten, welcher als Modul aufsetzbar ist. Dazu ist an dem Motorgehäuse des Elektromotors ein Träger mit einer Adapterplatte angeformt, auf welchen der Elektronikkasten aufgesetzt werden kann.

JP 2003 018797 A offenbart einen Elektromotor mit einem Elektronikgehäuse, welches an der Außenseite des Motors angesetzt ist. Das dort gezeigte Elektronikgehäuse ist in mehrere Räume geteilt, einem Raum, in welchem elektronische Komponenten angeordnet sind und einen Raum, in welchem die elektrischen Anschlussleitungen kontaktiert sind. Die elektrischen Anschlüsse zu dem Motor hin liegen wiederum in einem weiteren dem Motor zugewandten Raum. Um die elektrischen Anschlüsse herstellen zu können, muss auch dieses Elektronikgehäuse vollständig geöffnet werden, sodass die Elektronik frei zugänglich und nicht mehr sicher vor Beschädigungen geschützt ist.

Es ist Aufgabe der Erfindung, ein Pumpenaggregat in der Weise zu verbessern, dass ein Klemmenkasten bzw. ein Elektronikgehäuse auf einfache Weise sowohl mit den Spulen im Inneren des Statorgehäuses als auch mit einer elektrischen Anschlussleitung kontaktierbar ist und darüber hinaus das Elektronikgehäuse leicht abzudichten sowie elektronische Bauteile im Inneren des Elektronikgehäuses geschützt angeordnet sind.

Diese Aufgabe wird durch ein Pumpenaggregat mit den in Anspruch 1 angegebenen Merkmalen gelöst. Bevorzugte Ausführungsformen ergeben sich aus den Unteransprüchen, der Beschreibung sowie den Figuren.

Das erfindungsgemäße Pumpenaggregat weist in bekannter Weise einen elektrischen Antriebsmotor auf, welcher in einem Statorgehäuse angeordnet ist. In dem Statorgehäuse ist ein Stator mit elektrischen Spulen angeordnet. Im Inneren des Stators rotiert ein Rotor, welcher wiederum über eine Welle oder in anderer geeigneter Weise drehfest mit zumindest einem Laufrad des Pumpenaggregates verbunden ist. Zwischen Rotor und Stator kann darüber hinaus ein Spaltrohr oder eine Trennkalotte angeordnet sein, um den Antriebsmotor als nasslaufenden Elektromotor auszubilden. Der elektrische Antriebsmotor weist darüber hinaus einen Klemmenkasten auf, welcher mit dem Statorgehäuse an dessen Außenseite verbunden ist, Dabei kann der Klemmenkasten radial oder axial an das Statorgehäuse angesetzt sein.

Erfindungsgemäß ist der Klemmenkasten so ausgebildet, dass er in seinem Inneren zumindest eine Trennwand aufweist. Diese teilt den Innenraum des Klemmenkastens, welcher von den Außenwandungen des Klemmenkastens begrenzt wird, in zumindest zwei Bereiche, nämlich einen Elektronikbereich und einen Anschlussbereich, In dem Elektronikbereich sind die elektrischen und elektronischen Bauteile angeordnet, welche üblicherweise in solchen Klemmenkästen angeordnet sind. Dies können insbesondere elektronische Bauteile zur Motorsteuerung sein, beispielsweise Teile eines Frequenzumrichters oder zur Spannungsanpassung für den Antriebsmotor. In dem Anschlussbereich sind die elektrischen Anschlüsse zum Anschluss des Klemmenkastens angeordnet.

Der Anschlussbereich grenzt an eine Aussenwandung des Klemmenkastens an, in welcher zumindest eine Kabeldurchführung ausgebildet ist.

Dabei sind in dem Anschlussbereich zum einen die elektrischen Anschlüsse für zumindest eine Anschlussleitung, beispielsweise ein Netzkabel angeordnet. Zum anderen ist jedoch erfindungsgemäß vorgesehen, dass in demselben Anschlussbereich auch Kontakte zur elektrischen Verbindung mit elektrischen oder elektronischen Bauteilen vorhanden sind, welche im Inneren des Statorgehäuses angeordnet sind. Dies sind beispielsweise die Statorspulen oder aber weitere elektrische oder elektronische Bauelemente im Inneren des Statorgehäuses. D.h. in dem Anschlussbereich sind auch die elektrischen Anschlüsse zur Verbindung des Klemmenkastens mit dem Stator im Inneren des Statorgehäuses angeordnet. Dies hat den Vorteil, dass zwei wesentliche elektrische Anschlüsse, welcher ein solcher Klemmenkasten aufweist, nämlich die Anschlüsse für eine Anschlussleitung zur Stromversorgung und die Anschlüsse zur Verbindung mit dem Stator, in einem gemeinsamen von den übrigen elektronischen Bauteilen getrennten Anschlussbereich des Klemmenkastens verlegt werden. Dies vereinfacht die Abdichtung des Klemmenkastens, da nur dieser Anschlussbereich nach außen abgedichtet werden muss. Es ist kein weiterer Anschlussbereich erforderlich, welcher mit einem abnehmbaren Deckel verschlossen werden muss, wie es bei bekannten Anordnungen zum elektrischen Anschluss des Klemmenkastens mit einer Anschlussleitung vorgesehen ist.

Die Trennwand bildet idealerweise in dem übrigen Bereich des Klemmenkastens einen geschlossenen Elektronikbereich aus, sodass die weiteren elektronischen Bauteile im Inneren dieses Elektronikbereiches geschützt sind, auch wenn der Anschlussbereich zur Verbindung einer Anschlussleitung mit den dort angeordneten elektrischen Anschlüssen geöffnet werden muss.

Der Anschlussbereich ist dem Statorgehäuse zugewandt. Dies ist vorteilhaft, da in dem Anschlussbereich, wie vorangehend beschrieben auch Kontakte zur elektrischen Verbindung mit den im Inneren des Statorgehäuses angeordneten elektronischen und/oder elektrischen Bauelementen angeordnet sind. Auf diese Weise können diese Kontakte direkt mit korrespondierenden Kontakten oder Anschlüssen an dem Statorgehäuse in Eingriff gebracht werden.

Ferner ist der Anschlussbereich zu dem Statorgehäuse hin offen ausgebildet und wird durch das angrenzende Statorgehäuse oder einen das Statorgehäuse verschließenden Deckel verschlossen. Dies hat den Vorteil, dass der Anschlussbereich erfindungsgemäss sehr einfach geöffnet werden kann, dem der Klemmenkasten von dem Statorgehäuse abgenommen wird. Dann ist der Anschlussbereich in dem Klemmenkasten von der sonst dem Statorgehäuse zugewandten Seite her erfindungsgemäss zugänglich, sodass dort eine Anschlussleitung angeschlossen werden kann. Durch Aufsetzen des Klemmenkastens auf das Statorgehäuse wird der Anschlussbereich des Klemmenkastens dann nach außen verschlossen. Dazu kann weiter bevorzugt zwischen dem Klemmenkasten und dem Statorgehäuse oder einem das Statorgehäuse verschließenden Deckel eine Dichtung angeordnet sein, welche der Abdichtung des Anschlussbereiches nach außen dient, sodass von außen keine Feuchtigkeit in diesen Bereich und damit in das Innere des Klemmenkastens oder das Statorgehäuse eindringen kann.

Besonders bevorzugt ist der Klemmenkasten an eine axiale Stirnseite des Statorgehäuses angesetzt. Dabei kann der Klemmenkasten eine äußere Form aufweisen, welche der Außenform des Statorgehäuses entspricht, sodass ein harmonischer Übergang zwischen Statorgehäuse und Klemmenkasten erreicht werden kann. Das Statorgehäuse ist vorzugsweise rohrförmig mit kreisförmigem Querschnitt ausgebildet. Der Klemmenkasten kann entsprechend ebenfalls kreisförmig mit gleichem Durchmesser wie das Axialende des Statorgehäuses ausgebildet sein, sodass der Klemmenkasten sich bündig an das Axialende des Statorgehäuses anschließen kann. Die runde bzw. kreisförmige Form hat den vorteil, dass die Anlagefläche zwischen Statorgehäuse und Klemmenkasten sehr einfach durch eine umfängliche Dichtung abgedichtet werden kann. Diese kann als O-Ring ausgebildet sein oder beispielsweise auch an den Klemmenkasten oder das Statorgehäuse im Spritzguss angespritzt sein. Letzteres bietet sich insbesondere dann an, wenn Statorgehäuse und/oder Klemmenkasten aus Kunststoff gefertigt werden.

Die elektrischen Anschlüsse für die Anschlussleitung im Inneren des Anschlussbereiches sind vorzugsweise als Anschlussklemmen oder Stecckontakte ausgebildet. Dies ermöglicht es, die Anschlussleitung idealerweise ohne Werkzeug mit den elektrischen Anschlüssen zu kontaktieren.

Die dazu erforderlichen Anschlussklemmen oder Steckkontakte erstrecken sich vorzugsweise durch die Trennwand hindurch. D.h. die Anschlussklemmen oder Steckkontakte sind elektrisch leitend mit elektrischen bzw. elektronischen Bauteilen Im Inneren des Elektronikbereiches verbunden. Besonders bevorzugt sind die Anschlussklemmen oder Steckkontakte direkt auf einer Leiterplatte, welche sich im Elektronikbereich befindet, angeordnet. Dann können sich die Anschlussklemmen oder Steckkontakte so durch die Trennwand hindurcherstrecken, dass diejenigen Bereiche der Anschlussklemmen oder Steckkontakte, welcher mit einer Anschlussleitung kontaktiert werden müssen im Anschlussbereich des Klemmenkastens gelegen sind. Auch erforderliche Bedienelemente wie Hebel zum Öffnen und/oder Schließen der Anschlussklemmen sind dann vorzugsweise im Anschlussbereich gelegen. So kann die Anschlussleitung mit Anschlussklemmen oder Steckkontakten verbunden werden, ohne den Elektronikbereich öffnen zu müssen. Gleichzeitig wird aber von den Anschlussklemmen die elektrische Verbindung in den Elektronikbereich hergestellt, Darüber hinaus ist die Anordnung der Anschlussklemmen und Steckkontakte sehr einfach, da diese mit weiteren elektrischen und elektronischen Bauteilen auf einer Leiterplatte, welche im Elektronikbereich angeordnet ist, platziert werden können. Damit sich die Anschlussklemmen oder Steckkontakte durch die Trennwand hindurcherstrecken können, kann diese eine Öffnung aufweisen. In dem Bereich dieser Öffnung kann gegebenenfalls auch noch eine Dichtung angeordnet sein. Alternativ wäre es auch möglich, die Anschlussklemmen oder Steckkontakte direkt in der Trennwand auszubilden und die Trennwand dann an ihrer dem Elektronikbereich zugewandten Seite an einer dort angeordneten Leiterplatte zu befestigen. So könnte die Zahl der erforderlichen Bauteile reduziert werden.

Die Anschlussklemmen zum Anschluss der Anschlussleitung weisen bevorzugt einen Hebel zum Öffnen der Klemmen auf. Zum Öffnen der Klemmen wird der Hebel vorzugsweise gegen eine Federvorspannung geöffnet, wodurch Anschlussöffnungen der Klemmen frei gegeben werden, in welche die elektrischen Leiter einer Anschlussleitung eingeschoben werden, Beim Loslassen des Hebels wird dieser dann vorzugsweise durch Federkraft wieder in seine Ausgangslage zurückbewegt und im Inneren werden die Leiter des Anschlusskabels geklemmt. Bevorzugt ist der Hebel so angeordnet, dass er zum Öffnen zu einer Kabeldurchführung in einer Wandung des Anschlussraumes hin bewegbar ist. Dabei ist die Anschlussklemme vorzugsweise gegenüberliegend zu der Kabeldurchführung angeordnet, sodass die Öffnungen, in welche die Leiter des Kabels eingeschoben werden, der Kabeldurchführung gegenüberliegen. Wenn dann der Hebel zum Öffnen der Klemmen in Richtung der Kabeldurchführung gedrückt werden muss, hat dies den Vorteil, dass der Hebel mit dem Klemmenkasten mit einer Hand ergriffen werden kann und auf das Kabel zu bewegt werden kann. Dabei kann der Hebel sehr einfach in der geöffneten Stellung gehalten werden.

Die Kontakte zur elektrischen Verbindung mit den elektrischen oder elektronischen Bauteilen im Inneren des Statorgehäuses sind weiter bevorzugt als Steckkontakte ausgebildet, welche mit korrespondierenden Steckkontakten an dem Stator oder Statorgehäuse im Eingriff sind. Dies ermöglicht es, sehr einfach den Klemmenkasten auf das Statorgehäuse aufzustecken, wobei dann die Steckkontakte zwischen Klemmenkasten und Stator elektrisch leitend miteinander in Eingriff treten. Es ist insbesondere dann von Vorteil, wenn der Klemmenkasten auch zum Anschluss der Anschlussleitung vom Statorgehäuse abgenommen werden muss, da so diese Verbindung leicht getrennt und wieder zusammengeführt werden kann.

Der Anschlussbereich grenzt erfindungsgemäss an eine Außenwandung des Klemmenkastens an, in welcher zumindest eine Kabeldurchführung ausgebildet ist. Dabei ist dies vorzugsweise eine Außenwandung, welche dem Statorgehäuse abgewandt ist. Wenn der Klemmenkasten an das axiale Stirnende des Statorgehäuses angesetzt wird, kann der Klemmenkasten topfförmig ausgebildet sein, wobei er mit seiner offenen Seite an die Stirnseite des Statorgehäuses angesetzt wird.

Die Kabeldurchführung ist dann vorzugsweise in einer Umfangswandung des Klemmenkastens ausgebildet. Insofern grenzt der Anschlussbereich dann vorzugsweise an die offene, dem Statorgehäuse zugewandte Seite und diese Umfangswandung mit der Kabeldurchführung an.

Die Kabeldurchführung kann in bekannter Weise eine Dichtung und/oder Zugentlastung für das Anschlusskabel aufweisen,

Im Anschlussbereich können neben den elektrischen Anschlüssen, welche vorangehend beschrieben wurden, auch noch Bedienelemente angeordnet sein. So kann beispielsweise ein Stellelement zum Einstellen der Drehzahl des Antriebsmotors dort angeordnet sein. Dabei kann ein solches Einstellelement so ausgebildet sein, dass es vom Anschlussbereich her betätigt bzw. einstellbar ist und sich durch die Trennwand hindurch in den Elektronikbereich erstreckt, in dem dann ein entsprechendes elektrisches oder elektronisches Bauelement vorgesehen ist, welches eine Stellbewegung in eine elektrische Größe umsetzt. Beispielsweise kann hier ein Potentiometer vorgesehen werden, welches mittels einer im Anschlussbereich angeordneten Stellschraube gedreht werden kann. Hierzu kann sich die Stellschraube oder eine Welle durch die Trennwand hindurcherstrecken.

Gemäß einer weiteren bevorzugten Ausführungsform erstreckt sich die Trennwand zumindest in einem Abschnitt schräg zu den Außenseiten, insbesondere den Stirnseiten des Klemmenkastens. Auf diese Weise kann erreicht werden, dass der Anschlussbereich in dem Bereich, in welchem eine Kabeldurchführung mündet, eine größere Höhe aufweist, als in den anderen Bereichen. Im Bereich der Kabeldurchführung ist gegebenenfalls eine größere Höhe oder Tiefe des Anschlussbereiches erforderlich, da die Kabeldurchführung vorzugsweise in einer Seiten- oder Umfangswandung des Klemmenkastens angeordnet ist.

Wie beschrieben, ist der Klemmenkasten vorzugsweise topfförmig mit einer offenen Seite ausgebildet, welche durch das Statorgehäuse oder einen das Statorgehäuse verschließenden Deckel verschlossen wird. Dazu wird der Klemmenkasten mit der offenen Seite auf das Statorgehäuse, vorzugsweise an dessen axialer Stirnseite aufgesetzt. Im Umfang der Öffnung des Klemmenkastens kann eine Dichtung vorgesehen sein oder eine Dichtfläche, an welcher eine an dem Statorgehäuse angeordnete Dichtung zur Abdichtung zur Anlage kommt. Bei dieser topfförmigen Ausgestaltung erstreckt sich die Trennwand vorzugsweise schräg zu der offenen Stirnseite des Topfes. Auf diese Weise kann erreicht werden, dass ein Anschlussbereich geschaffen wird, welcher sich an der Seite der Kabeldurchführung, welche vorzugsweise an einer Umfangswandung des Topfes vorgesehen ist, eine größere axiale Höhe aufweist, sodass von dieser Seite her das Kabel in den Anschlussbereich eingeführt werden kann. Die schräge Trennwand liegt dabei weiter bevorzugt der Kabeldurchführung gegenüber, sodass ein in die Kabeldurchführung von außen eingeschobenes Kabel von der schrägen Trennwand vorzugsweise in seiner Richtung umgelenkt wird, sodass es von der Öffnung des Klemmenkastens her leicht ergriffen und in eine Anschlussklemme eingeführt werden kann.

Die Trennwand ist vorzugsweise ein in den Klemmenkasten eingesetztes separates Bauteil, welches mit den Wandungen des Klemmenkastens vorzugsweise über Rastverbindung verbunden ist. Dies ermöglicht eine einfache Fertigung und Montage des Klemmenkastens. So können zunächst die elektronischen Bauteile in dem Elektronikbereich oder an der Trennwand angeordnet werden und die Trennwand dann In den Klemmenkasten eingesetzt werden, wodurch der Elektronikbereich verschlossen und von dem Anschlussbereich getrennt wird. Gegebenenfalls kann zwischen der Trennwand und der angrenzenden Wandung des Klemmenkastens eine Dichtung zur Abdichtung des Elektronikbereiches angeordnet sein, Die Verbindung über Rastverbindungen ermöglicht eine sehr einfache Montage.

Gemäß einer besonderen Ausführungsform der Erfindung trägt die Trennwand zumindest eine In dem Elektronikraum angeordnete Leiterplatte. Dadurch vereinfacht sich die Montage noch weiter, da die Leiterplatte vor dem Einsetzen der Trennwand an dieser Trennwand befestigt werden kann und dann gemeinsam mit der Trennwand in den Klemmenkasten eingesetzt werden kann. So entfällt eine separate Fixierung und Montage der Leiterplatte im Inneren des Klemmenkastens. Ferner kann ein Anschluss. insbesondere ein Anschlussstecker zur Verbindung mit den elektrischen oder elektronischen Bauteilen im Inneren des Statorgehäuses ebenfalls an der Trennwand ausgebildet werden. Dann kann dieser elektrische Anschluss direkt mit der Leiterplatte auf der anderen Seite der Trennwand verbunden werden. Besonders bevorzugt kann sich die Leiterplatte jedoch durch eine Öffnung in der Trennwand mit einem einen Steckkontakt bildenden Abschnitt hindurcherstrecken. Dies ist vorzugsweise eine Seiten- oder Stirnkante der Leiterplatte, wobei an diese Stirn- oder Seitenkante angrenzend auf einer oder zwei entgegengesetzten Oberfläche der Leiterplatte elektrische Kontakte ausgebildet sind, welche mit einem Anschlussstecker am Statorgehäuse kontaktierbar sind.

Das Pumpenaggregat ist, wie oben beschrieben, vorzugsweise ein Umwälzpumpenaggregat, insbesondere ein Heizungs- oder Brauchwasser-Umwälzpumpenaggregat. Der Antriebsmotor kann vorzugsweise ein Spaltrohrmotor oder Kugelmotor mit einer Trennkalotte sein. In einem solchen Spaltrohrmotor ist zwischen dem Stator und dem Rotor ein den Statorraum von dem Rotorraum trennendes Spaltrohr angeordnet. Im Sinne der Erfindung ist dabei unter einem Spattrohr jedes zur Trennung von Rotorraum und Statorraum geeignetes Element zu verstehen, unabhängig von seiner Form. So kann ein Spaltrohr auch scheiben- oder kalottenförmig ausgebildet sein.

Nachfolgend wird die Erfindung beispielhaft anhand der beigefügten Zeichnungen beschrieben. In diesen zeigt:
- Fig. 1: eine teilweise explodierte Schnittansicht eines erfindungsgemäßen Pumpenaggregates,
- Fig. 2: eine Schnittansicht des Klemmenkastens des Pumpenaggregates gemäß Fig. 1 und
- Fig. 3: im Schnitt einen Klemmenkasten gemäß einer alternativen Ausführungsform,

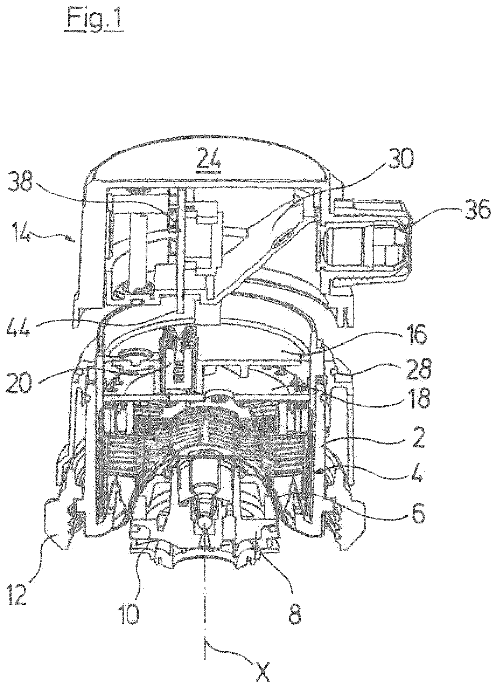

Das Pumpenaggregat in Fig. 1 weist in bekannter Weise ein Statorgehäuse 2 auf, welches im Wesentlichen rohrförmig ausgebildet ist und in dessen Inneren ein Stator 4 mit den üblichen Eisenteilen und Statorspulen angeordnet ist. Der Stator 4 umgibt eine Trennkalotte bzw. ein Spaltrohr 6, welches gleichzeitig das Axialende des Statorgehäuses 2 umschließt, indem es nach außen umgebogen und um die axiale Stirnseite des Statorgehäuses 2 gebördelt ist. Im Inneren des Spaltrohres 6 ist ein Rotor 8 drehbar gelagert. Bei der hier gezeigten Ausführungsform handelt es sich um einen Kugelmotor, bei welchem der Rotor 8 halbkugelförmig und das Spaltrohr 6 in Form einer Trennkalotte entsprechend halbkugelförmig bzw. kalottenförmig ausgebildet ist. In dem Rotor 8 ist integriert ein Laufrad 10 ausgebildet. Dies greift in ein hier nicht gezeigtes Pumpengehäuse ein. Das Statorgehäuse 2 wird mit dem Pumpengehäuse mittels einer Überwurfmutter 12 verbunden. An dem Statorgehäuse 2 ist ein topfförmiger Klemmenkasten 14 angesetzt. An dem hier gezeigten Ausführungsbeispiel ist das Statorgehäuse 2 an dieser Axialseite zusätzlich durch einen Deckel 16 verschlossen. Es ist jedoch zu verstehen, dass das Statorgehäuse 2 auch direkt durch den Klemmenkasten 14 verschlossen werden könnte. Der Klemmenkasten weist einen Außendurchmesser auf, welcher im Wesentlichen dem Außendurchmesser des Statorgehäuses 2 bzw. dessen Ummantelung entspricht. So wird insgesamt ein im Wesentlichen zylindrisches Pumpenaggregat geschaffen.

Im Inneren des Statorgehäuses 2 ist darüber hinaus eine Leiterplatte 18 angeordnet, welche die Spulen des Stators 4 elektrisch kontaktiert und gegebenenfalls elektronische oder elektrische Bauelemente, beispielsweise einer Motorsteuerung trägt. Die Leiterplatte 18 ist mit einem Anschlussstecker 20 versehen, welcher den Deckel 16 durchgreift. Der Anschlussstecker 20 dient der Kontaktierung mit den elektrischen und elektronischen Bauelementen im Inneren des Klemmenkastens 14.

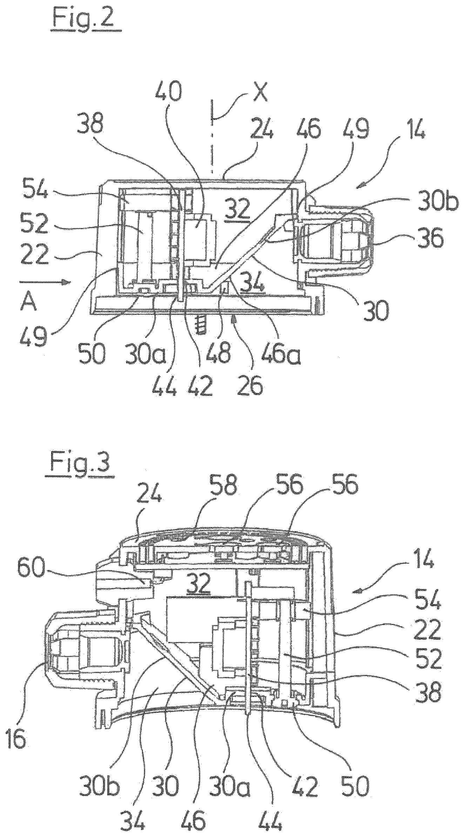

Der in Fig. 2 in einer Einzelansicht gezeigte Klemmenkasten 14 des Pumpenaggregates weist eine topfförmige Außenwandung auf, bestehend aus einer ringförmigen Umfangswandung 22 und einem sich quer erstreckenden Boden 24. Die Umfangswandung 22 erstreckt sich um die Längs- bzw. Drehachse X, der Boden 24 erstreckt sich im Wesentlichen quer hierzu an einem Axialende der Umfangswandung 22. Die Umfangswandung 22 und der Boden 24 sind vorzugsweise einstückig aus Kunststoff ausgebildet. An dem dem Boden 24 entgegengesetzten Axialende 26 ist der Klemmenkasten 14 offen ausgebildet. Das offene Axialende 26 wird vom Statorgehäuse 2 verschlossen, wenn dieses mit dem Klemmenkasten 14 verbunden ist. Dazu ist am Statorgehäuse eine umfängliche Dichtung 28 zugeordnet, welche am Innenumfang der Umfangswandung 22 im Bereich des Axialendes 26 dichtend zur Anlage kommt.

Im Inneren des Klemmenkastens 14 ist eine Trennwand 30 angeordnet. Diese teilt den Innenraum des Klemmenkastens 14 in zwei Bereiche, nämlich einen Elektronikbereich 32 und einen Anschlussbereich 34. Dabei weist die Trennwand 30 zwei Abschnitte 30a und 30b auf. Der Abschnitt 30a erstreckt sich im Wesentlichen parallel zum Boden 24, d.h. quer zur Längsachse X in der Nähe des offenen Axialendes 26. Ausgehend von diesem Abschnitt 30a erstreckt sich der Abschnitt 30b gewinkelt zur Umfangswandung 22 und zum Boden 24. Dort wo sich der Abschnitt 30a der Trennwand 30 erstreckt, weist der Anschlussbereich 34 nur eine geringe axiale Höhe in Richtung der Längsachse X auf, welche sich dann in dem Bereich, in welchem sich der Abschnitt 30b der Trennwand 30 schräg erstreckt bis zur gegenüberliegenden Umfangswandung 22 vergrößert. In dieser Umfangswandung ist eine Kabeldurchführung 36 ausgebildet, durch welche ein Anschlusskabel in den Anschlussbereich 34 im Inneren des Klemmenkastens 14 geführt werden kann. Die Kabeldurchführung 36 liegt dem schrägen Abschnitt 30b der Trennwand 30 gegenüber.

In dem Elektronikbereich 32 ist eine Leiterplatte 38 angeordnet, welche elektronische Bauteile zur Steuerung und/oder Spannungsversorgung des Elektromotors trägt. Diese elektronischen Bauteile 40 können beispielsweise einen Spannungswandler beinhalten. Die Leiterplatte 38 erstreckt sich quer zu dem Boden 24 im Wesentlichen parallel zur Längsachse X und greift durch eine Öffnung 42 in der Trennwand 30. Auf diese Weise wird die Leiterplatte 38 an der Trennwand 30 fixiert. Der Abschnitt 44 der Leiterplatte 38, welcher sich durch die Öffnung 42 hindurchersireckt und in den Anschlussbereich 34 hineinragt, bildet einen Steckkontakt bzw. Steckbereich. Dazu sind angrenzend an diese Stirnkante der Leiterplatte elektrische Kontakte auf deren Oberflächen aufgebracht, welche mit elektrischen Kontakten in dem Anschlussstecker 20 in Eingriff treten können, wenn der Klemmenkasten 14 auf das Statorgehäuse 2 aufgesetzt wird. Dann greift der Abschnitt 44 der Leiterplatte 38 elektrisch kontaktierend in den Anschlussstecker 20 ein. Auf diese Weise wird eine elektrische Verbindung zwischen den elektrischen und elektronischen Bauteilen in dem Elektronikbereich 32 und elektronischen Bauteilen in dem Elektronikbereich 32 des Klemmenkastens 14 und den elektrischen und elektronischen Bauteilen im Inneren des Statorgehäuses 2 hergestellt. Die elektrischen oder elektronischen Bauteile im Inneren des Statorgehäuses 2 sind insbesondere auf der Leiterplatte 18 angeordnet oder über diese elektrisch kontaktiert, wie beispielsweise die Spulen. Dieser Anschluss zur Verbindung des Klemmenkastens mit den elektrischen und elektronischen Bauteilen im Inneren des Stators wird somit von dem Abschnitt 44 der Leiterplatte 38 gebildet, welcher in dem Anschlussbereich 34 gelegen ist,

Auf der Leiterplatte 38 ist darüber hinaus eine Anschlussklemme 46 angeordnet, welche die Trennwand 30 durch eine Öffnung so durchgreift, dass ein Abschnitt 46a der Anschlussklemme 46, in welchem die Öffnungen zum Einschieben der Leiter eines Anschlusskabels ausgebildet sind, im Anschlussbereich 34 gelegen sind bzw. zum Anschlussbereich 34 geöffnet sind, sodass die Leiter des Anschlusskabels im Anschlussbereich 34 in die Anschlussklemme 46 eingeführt werden können. Die Anschlussklemme 46 weist darüber hinaus einen Hebel 48 auf. welcher zum Öffnen der Anschlussklemme betätigt werden muss. Dazu ist bei dieser Ausführungsform vorgesehen, dass zum Öffnen der Anschlussklemme 46 der Hebel 48 in Richtung auf die Kabeldurchführung 36 zu bewegt werden muss, d.h. in Richtung des Pfeiles A in Figur 2. Dies hat den Vorteil, dass mit einer Hand der Klemmenkasten 14 und der Hebel 48 ergriffen werden können und mit der anderen Hand das Anschlusskabel von der anderen Seite her in den Klemmenkasten eingeschoben werden kann, sodass ein einfaches Anschließen des Kabels an der Anschlussklemme 46 möglich ist.

Es ist zu sehen, dass sowohl die Anschlussklemme 46 bzw. deren Abschnitt 46a mit den Öffnungen zum Einschieben eines Kabels als auch der von dem Abschnitt 44 der Leiterplatte 38 gebildete Steckbereich zum Anschluss der elektrischen Komponenten im Inneren des Statorgehöuses 2 in demselben Anschlussbereich 34 Im Inneren des Klemmenkastens 14 gelegen sind. Dies hat den Vorteil, dass der Klemmenkasten 14 nur eine Öffnung aufweisen muss, welche abgedichtet werden muss. Zum Anschluss der Anschlussleitung kann der Klemmenkasten 14 einfach vom Statorgehäuse abgenommen werden, wodurch dann der Anschlussbereich 34 zugänglich wird.

Die Trennwand 30 ist zur Montage zunächst mit der Leiterplatte 18 verbunden, d.h. die Leiterplatte 18 wird in ihrem Abschnitt 44 durch die Öffnung 42 geführt. Anschließend wird die Trennwand 30 in den Klemmenkasten 14 eingesetzt und dort über Rastelemente 49 an der Umfangswandung 22 verrastet. So ist eine einfache Montage der Trennwand 30 mit der Leiterplatte 18 im Inneren des Klemmenkastens 14 möglich.

Im Anschlussbereich 34 ist darüber hinaus noch ein Einstellelement in Form einer Stellschraube 50 angeordnet, über welches die Motordrehzahl eingestellt werden kann. Die Stellschraube 50 ist mit einer sich durch den Abschnitt 30a der Trennwand 30 erstreckenden Welle 52 verbunden, welche ein auf der Leiterplatte 38 angeordnetes Potentiometer 54 betätigt.

Fig. 3 zeigt eine alternative Ausführungsform des Klemmenkastens 14, welche sich von der vorangehenden beschriebenen Ausführungsform dadurch unterscheidet, dass in dem Boden 24' zusätzliche Bedienelemente 56 und Anzeigeelemente 58 angeordnet sind. Darüber hinaus ist in einer Umfangswandung 22 angrenzend an den Elektronikbereich 32 noch ein zusätzlicher Anschlussstecker 60 ausgebildet, welcher zum Anschluss eines Sensorelementes dient.

### Bezugszeichenliste

- 2: - Statorgehäuse
- 4: - Stator
- 6: - Spaltrohr
- 8: - Rotor
- 10: - Laufrad
- 12: - Überwurfmutter
- 14: - Klemmenkasten
- 16: - Deckel
- 18: - Leiterplatte
- 20: - Anschlussstecker
- 22: - Umfangswandung
- 24: - Boden
- 26: - Axialende
- 28: - Dichtung
- 30, 30a, 30b: - Trennwand
- 32: - Elektronikbereich
- 34: - Anschlussbereich
- 36: - Kabeldurchführung
- 38: - Leiterplatte
- 40: - Elektronische Bauteile
- 42: - Öffnung
- 44: - Abschnitt
- 46, 46a: - Anschlussklemme
- 48: - Hebel
- 50: - Stellschraube
- 52: - Welle
- 54: - Potentiometer
- 56: - Bedienelemente
- 58: - Anzeigelement
- 60: - Anschlussstecker
- X: - Längs- bzw. Drehachse
- A: - Druckrichtung zum Öffnen der Anschlussklemme 46

## Patentansprüche

1. Pumpenaggregat mit einem elektrischen Antriebsmotor, welcher ein Statorgehäuse (2) und zumindest einen mit diesem verbundenen Klemmenkasten (14) aufweist, wobei der Klemmenkasten (14) in seinem Inneren zumindest eine Trennwand (30) aufweist, welche einen Innenraum des Klemmenkastens (14) in zumindest einen Elektronikbereich (32) mit elektronischen Bauteilen (40) und einen Anschlussbereich (34) teilt, wobei der Anschlussbereich (34) an eine Außenwandung (22) des Klemmenkastens (14) angrenzt, in welcher zumindest eine Kabeldurchführung (36) ausgebildet ist und in dem Anschlussbereich (34) sowohl elektrische Anschlüsse (46) für zumindest eine Anschlussleitung als auch Kontakte (44) zur elektrischen Verbindung mit im Inneren des Statorgehäuses (2) angeordneten elektrischen oder elektronischen Bauteilen (18) vorhanden sind,
wobei der Anschlussbereich (34) dem Statorgehäuse (2) zugewandt ist und wobei der Anschlussbereich (34) zu dem Statorgehäuse (2) hin derart offen ausgebildet ist und durch das angrenzende Statorgehäuse (2) oder einen das Statorgehäuse (2) verschließenden Deckel (16) verschlossen ist, dass, wenn der Klemmenkasten (14) von dem Statorgehäuse abgenommen wird, der Anschlussbereich (34) in dem Klemmenkasten von der sonst dem Statorgehäuse zugewandten Seite her zugänglich ist, so dass dort eine Anschlussleitung angeschlossen werden kann.

2. Pumpenaggregat nach Anspruch 1, **dadurch gekennzeichnet, dass** der Klemmenkasten (14) an eine axiale Stirnseite des Statorgehäuses (2) angesetzt ist.

3. Pumpenaggregat nach einem der vorangehenden Ansprüche, **dadurch gekennzeichnet, dass** die elektrischen Anschlüsse (46) für die Anschlussleitung als Anschlussklemmen (46) ausgebildet sind.

4. Pumpenaggregat nach Anspruch 3, **dadurch gekennzeichnet, dass** die Anschlussklemmen (46) sich durch die Trennwand (30) hindurch erstrecken.

5. Pumpenaggregat nach Anspruch 1 oder 2, **dadurch gekennzeichnet, dass** die elektrischen Anschlüsse (46) für die Anschlussleitung als Steckkontakte ausgebildet sind.

6. Pumpenaggregat nach Anspruch 5, **dadurch gekennzeichnet, dass** die Steckkontakte sich durch die Trennwand (30) hindurch erstrecken.

7. Pumpenaggregat nach Anspruch 3 oder 4, **dadurch gekennzeichnet, dass** die Anschlussklemmen (46) einen Hebel (48) zum Öffnen der Anschlussklemmen (46) aufweisen, wobei der Hebel (48) so angeordnet ist, dass er zum Öffnen zu einer Kabeldurchführung (36) in einer Wandung (22) des Anschlussraumes (34) hin bewegbar ist.

8. Pumpenaggregat nach einem der vorangehenden Ansprüche, **dadurch gekennzeichnet, dass** die Kontakte zur elektrischen Verbindung mit den elektrischen oder elektronischen Bauteilen (18) im Inneren des Statorgehäuses (2) als Steckkontakte (44) ausgebildet sind, welche mit korrespondierenden Steckkontakten (20) an dem Stator oder Statorgehäuse (2) in Eingriff sind.

9. Pumpenaggregat nach einem der vorangehenden Ansprüche, **dadurch gekennzeichnet, dass** die Trennwand (30) zumindest in einem Abschnitt (30b) schräg zu den Außenseiten (22, 24), insbesondere den Stirnseiten (24) des Klemmenkasten (14) verläuft.

10. Pumpenaggregat nach einem der vorangehenden Ansprüche, **dadurch gekennzeichnet, dass** der Klemmenkasten (14) topfförmig mit einer offenen Seite (36) ausgebildet ist, welche durch das Statorgehäuse (2) oder einen das Statorgehäuse (2) verschließenden Deckel (16) verschlossen ist.

11. Pumpenaggregat nach einem der vorangehenden Ansprüche, **dadurch gekennzeichnet, dass** die Trennwand (30) ein in den Klemmenkasten (14) eingesetztes separates Bauteil ist, welches mit den Wandungen des Klemmenkasten (14) vorzugsweise über Rastverbindungen verbunden ist.

12. Pumpenaggregat nach einem der vorangehenden Ansprüche, **dadurch gekennzeichnet, dass** die Trennwand (30) zumindest eine in dem Elektronikbereich (32) angeordnete Leiterplatte (38) trägt.

13. Pumpenaggregat nach einem der vorangehenden Ansprüche, **dadurch gekennzeichnet, dass** es als Umwälzpumpenaggregat, insbesondere als Heizungs- oder Brauchwasser-Umwälzpumpenaggregat ausgebildet ist.

14. Pumpenaggregat nach einem der vorangehenden Ansprüche, **dadurch gekennzeichnet, dass** der Antriebsmotor ein Spaltrohrmotor ist.

## Claims

1. A pump assembly with an electrical drive motor which comprises a stator housing (2) and at least one terminal box (14) which is connected to this, wherein the terminal box (14) in its interior comprises at least one separating wall (30) which divides an interior of the terminal box (14) into at least one electronics region (32) with electronic components (40) and into a connection region (34), wherein the connection region (34) is adjacent to an outer wall (22) of the terminal box (14), in which outer wall at least one cable feed-through (36) is formed and electrical connections (46) for at least one connection lead as well as contacts (44) for the electrical connection to electrical or electronic components (18) which are arranged in the inside of the stator housing (2) are present in the connection region (34),
wherein the connection region (34) faces the stator housing (2) and wherein the connection region (34) is designed in an open manner towards the stator housing (2) and is closed by the adjacent stator housing (2) or a cover (16) which closes the stator housing (2), in a manner such that when the terminal box (14) is removed from the stator housing , the connection region (34) in the terminal box is accessible from the side which otherwise faces the stator housing, so that a connection lead can be connected there.

2. A pump assembly according to claim 1, **characterised in that** the terminal box (14) is applied onto an axial face side of the stator housing (2).

3. A pump assembly according to one of the preceding claims, **characterised in that** the electrical connections (46) for the connection lead are designed as connection terminals (46).

4. A pump assembly according to claim 3, **characterised in that** the connection terminals (46) extend through the separating wall (30).

5. A pump assembly according to claim 1 or 2, charatcreised in that the electrical connections (46) for the connection lead are designed as plug-in contacts.

6. A pump assembly according to claim 5, **characterised in that** the plug-in contacts extend through the separating wall (30).

7. A pump assembly according to claim 3 or 4, **characterised in that** the connection terminals (46) comprise a lever (48) for opening the connection terminals (46), wherein the lever (48) is arranged such that for opening, it can be moved towards a cable feed-through (36) in a wall (22) of the connection space (34).

8. A pump assembly according to one of the preceding claims, **characterised in that** the contacts for the electrical connection to the electrical or electronic components (18) in the inside of the stator housing (2) are designed as plug-in contacts (44) which are engaged with corresponding plug-in contacts (20) on the stator or stator housing (2).

9. A pump assembly according to one of the preceding claims, **characterised in that** the separating wall (30) at least in a section (30b) runs obliquely to the outer sides (22, 24), in particular the face sides (24) of the terminal box (14).

10. A pump assembly according to one of the preceding claims, **characterised in that** the terminal box (14) is designed in a pot-like manner with an open side (36) which is closed by the stator housing (2) or a cover (16) which closes the stator housing (2).

11. A pump assembly according to one of the preceding claims, **characterised in that** the separating wall (30) is a separate component which is inserted into the terminal box (14) and which is connected to the walls of the terminal box (14) preferably via latching connections.

12. A pump assembly according to one of the preceding claims, **characterised in that** the separating wall (30) carries at least one circuit board (38) which is arranged in the electronics region (32).

13. A pump assembly according to one of the preceding claims, **characterised in that** it is designed as a circulation pump assembly, in particular as a heating or service water circulation pump assembly.

14. A pump assembly according to one of the preceding claims, **characterised in that** the drive motor is a canned motor.

## Revendications

1. Groupe motopompe avec un moteur d'entraînement électrique qui comprend un carter de stator (2) et au moins un boîtier de raccordement (14) relié à celui-ci, le boîtier de raccordement comprenant en son intérieur au moins une paroi de division (30) qui divise un espace intérieur du boîtier de raccordement (14) au moins en une zone d'électronique (32) avec des composants électroniques (40) et une zone de raccordement (34), la zone de raccordement (34) étant adjacente à une paroi extérieure (22) du boîtier de raccordement (14) dans laquelle au moins un passage de câble (36) est formé, et la zone de raccordement (34) comprenant aussi bien des raccords électriques (46) pour au moins un câble de raccordement que des contacts (44) pour le raccordement électrique à des composants électriques ou électroniques (18) disposés à l'intérieur du carter de stator (2),
la zone de raccordement (34) étant orientée vers le carter de stator (2) et la zone de raccordement (34) étant configurée de façon ouverte telle, et fermée par le carter de stator (2) adjacent ou par un couvercle (16) fermant le carter de stator (2), que la zone de raccordement (34) est accessible dans le boîtier de raccordement, lorsque le boîtier de raccordement (14) est retiré du carter de stator, à partir du côté autrement orienté vers le carter de stator, si bien qu'un câble de raccordement puisse y être raccordé.

2. Groupe motopompe selon la revendication 1, **caractérisé en ce que** le boîtier de raccordement (14) est fixé sur un côté frontal axial du carter de stator (2).

3. Groupe motopompe selon l'une des revendications précédentes, **caractérisé en ce que** les raccords électriques (46) pour le câble de raccordement sont configurés comme des bornes de raccordement (46).

4. Groupe motopompe selon la revendication 3, **caractérisé en ce que** les bornes de raccordement (46) s'étendent à travers la paroi de division (30).

5. Groupe motopompe selon la revendication 1 ou 2, **caractérisé en ce que** les raccords électriques (46) pour le câble de raccordement sont configurés comme des contacts à fiches.

6. Groupe motopompe selon la revendication 5, **caractérisé en ce que** les contacts à fiches s'étendent à travers la paroi de division (30).

7. Groupe motopompe selon la revendication 3 ou 4, **caractérisé en ce que** les bornes de raccordement (46) comportent un levier (48) pour ouvrir les bornes de raccordement (46), le levier (48) étant disposé de manière telle qu'il soit mobile, pour ouvrir, vers un passage de câble (36) dans une paroi (22) de la zone de raccordement (34).

8. Groupe motopompe selon l'une des revendications précédentes, **caractérisé en ce que** les contacts pour la liaison électrique avec les composants (18) électriques ou électroniques sont formés à l'intérieur du carter de stator (2) comme des contacts à fiches (44) qui sont en prise avec les contacts à fiches (20) correspondants au stator ou au carter de stator (2).

9. Groupe motopompe selon l'une des revendications précédentes, **caractérisé en ce que** la paroi de division (30) passe, au moins dans un segment (30b), de manière oblique par rapport aux faces extérieures (22, 24), notamment aux faces frontales (24) du boîtier de raccordement (14).

10. Groupe motopompe selon l'une des revendications précédentes, **caractérisé en ce que** le boîtier de raccordement (14) est réalisé en forme de pot avec un côté ouvert (36) qui est fermé par le carter de stator (2) ou par un couvercle (16) fermant le carter de stator (2).

11. Groupe motopompe selon l'une des revendications précédentes, **caractérisé en ce que** la paroi de division (30) est un élément séparé placé dans le boîtier de raccordement (14), qui est relié aux parois du boîtier de raccordement (14), de préférence moyennant des liaisons par encliquetage.

12. Groupe motopompe selon l'une des revendications précédentes, **caractérisé en ce que** la paroi de division (30) porte au moins une carte de circuits imprimés (38) disposée dans la zone d'électronique (32).

13. Groupe motopompe selon l'une des revendications précédentes, **caractérisé en ce qu'**il est conçu comme groupe pompe de recirculation, notamment comme groupe pompe de recirculation pour eau destinée au chauffage ou eau sanitaire.

14. Groupe motopompe selon l'une des revendications précédentes, **caractérisé en ce que** le moteur d'entrainement est un moteur à gaine.
